# EUROPEAN PATENT APPLICATION

(11) **EP 2 075 086 A1**
(43) Date of publication of application: **01.07.2009**
(21) Application number: 08172519.4
(22) Date of filing: 22.12.2008
(51) Int. Cl.: B23Q 11/00, B08B 3/02

(54) **Unit for removing chips, slag and residues from elements being processed**

(30) Priority: 28.12.2007 IT BO20070854
(71) Applicant: Lodi, Loris, 40013 Castel Maggiore BO (IT); Paiano, Daniele, 40013 Castel Maggiore BO (IT)
(72) Inventor: Lodi, Loris, 40013 Castel Maggiore BO (IT); Paiano, Daniele, 40013 Castel Maggiore BO (IT)
(74) Representative: Modiano, Micaela Nadia

(57) **Abstract**

A unit (1) for removing chips, slag and residues from elements (2) being processed, comprising a box-like body (3) provided with at least one internal cavity (4) onto which at least one dispenser (5) is directed which is supplied by at least one respective circuit (6) for feeding cleaning fluid. The box-like body (3) comprises at least one opening (7) for introducing and removing an element (2) to be cleaned.

## Description

The present invention relates to a unit for removing chips, slag and residues from elements being processed.

Any element and/or product obtained by way of machining processes is, at the end of such processes, dirty or at the very least covered with residues of such processes.

In processes that provide for the removal of chips, for example, the product obtained at the end of a treatment with a given machine bears, in adhesion on its outer surface, a variable quantity of chips and/or dust, generated by the abrasion of its surface by the tool and in most cases by the lubricant used during such treatment.

The process generally consists of incision (which can be more or less deep and more or less localized) by a tool on the surface of the raw material to "transform" it into the finished product: depending on the type of machine, the tool might move with respect to the product or vice versa.

The lubricant fluid is normally constituted by an emulsion of water and oil, although certain specific processes adopt oil alone (with particular chemical and physical properties) or other specific fluids (in some cases, alcohols are used due to their high heat removal power during evaporation).

Accordingly, in any case, the finished product, at the end of the process, is dirty. As such, it cannot be stacked in the store or used directly, because the surface residue might compromise its functionality. It is further obvious that in all cases in which the finished product is intended for sale, it is not possible to present a dirty product or a product covered with processing residues to the end customer.

The practice is to use nozzles for dispensing compressed air (normally known as guns) that can be gripped manually to clean the products.

By directing the nozzle toward the part, the air jet detaches all the residues, leaving the product clean and without any type of material (be it dust or chips or small quantities of lubricant).

This type of cleaning entails severe problems: the residues are in fact released into the atmosphere of the space in which cleaning is performed, since the strong jet of air in practice atomizes them.

This creates severe problems linked to the deposition of these residues on the surfaces of the space (floors, walls, surfaces of machines and apparatuses) that can create risks: the presence of lubricating emulsion on floors makes them slippery and therefore dangerous for personnel, and likewise the surfaces of machines can become slippery, making their use unsafe; a further severe danger is caused by any deposition of sediment on live parts, since metallic dust is an electrical conductor and some types of lubricating emulsion also can be an electrical conductor. The evident risk is that a part that is normally not live is brought to a dangerous electrical potential by conduction caused by the sediment: users are therefore subject to the risk of electrocution.

The fact that the process residues (particularly chips) can deposit in any point of the work environment should not be forgotten: if chips deposit on a grip portion of any object, when such object is gripped by the user, it is extremely likely that such user will be injured, because the surfaces of chips are always sharp.

The fact that atomization into the environment is not controllable is equally severe. Even assuming, therefore, that the operator assigned to cleaning the parts has appropriate masks for protecting his eyes and respiratory tract, it is obvious that the other people working in the same environment are not likewise equipped and therefore might be subject to the risk of breathing, inhaling or receiving in contact with their mucous membranes (for example the eyes) the atomized residues.

There are embodiments that use a sort of protective cabinet (constituted by two or three containment walls) within which the compressed air dispensing gun is used to clean the product. In this case, the risk is distinctly reduced, provided that the cleaning operator works with extreme skill: directing the jet of air in one of the directions in which the containment wall is not present in order to better clean a particularly challenging surface entails the inevitable atomization of residues into the atmosphere of the environment.

Besides, directing the air jet intentionally onto some surfaces can entail the expulsion of debris toward the operator, with consequent possible damage, because the walls do not constitute an effective protection and because the use of a gun for dispensing compressed air allows the mutual orientation of the product and of the air jet in an unlimited number of configurations (including therefore dangerous ones as well).

Finally, it is clear that the residues, of whatever kind they might be, must be collected and adequately stored for correct disposal. All known embodiments do not ensure collection of all the residues and therefore have severe problems of environmental incompatibility.

The aim of the present invention is to provide a unit for removing chips, slag and residues from elements being processed, in which the escape of chips, slag and residues and their dispersion into the environment are avoided.

Within this aim, an object of the present invention is to provide a unit for removing chips, slag and residues from elements being processed that is particularly safe for the user and for the operators that are present in the environment in which the unit is operating.

Another object of the present invention is to provide a unit for removing chips, slag and residues from elements being processed that is adapted to collect the removed material for its correct disposal according to currently applicable environmental compatibility provisions.

Another object of the present invention is to provide a unit for removing chips, slag and residues from elements being processed that has low costs, is relatively simple to provide in practice, and is safe in application.

This aim and these and other objects, which will become better apparent hereinafter, are achieved by the present unit for removing chips, slag and residues from elements being processed, characterized in that it comprises a box-like body provided with at least one internal cavity onto which at least one dispenser is directed which is supplied by at least one respective circuit for feeding cleaning fluid, said box-like body comprising at least one opening for introducing and removing an element to be cleaned.

Further characteristics and advantages of the invention will become better apparent from the following detailed description of preferred but not exclusive embodiments of a unit for removing chips, slag and residues from elements being processed, illustrated by way of non-limiting example in the accompanying drawings, wherein:

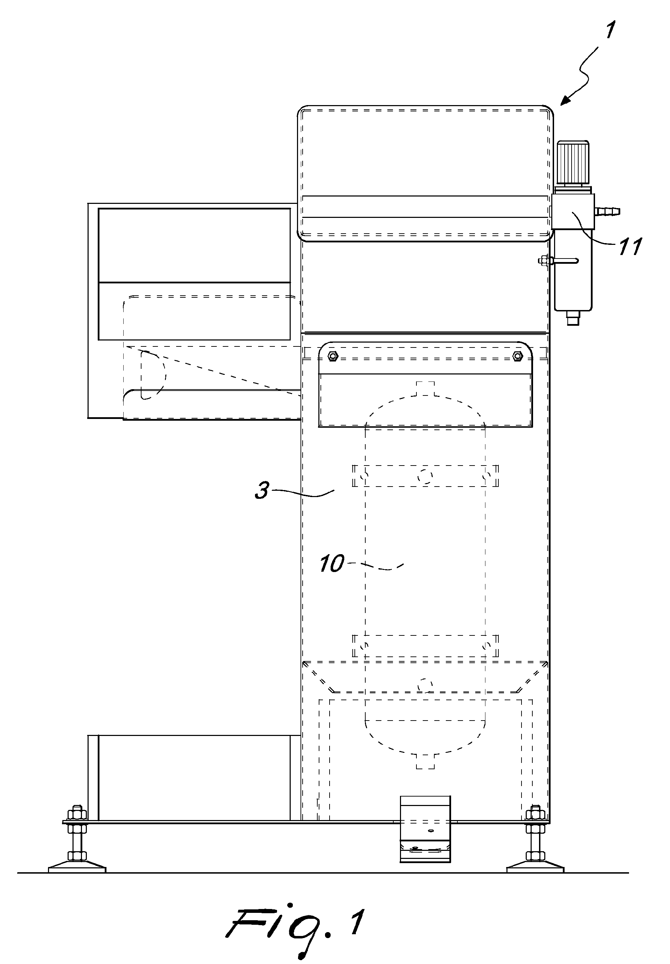

Figure 1 is a front view of a unit for removing chips, slag and residues from elements being processed according to the invention;

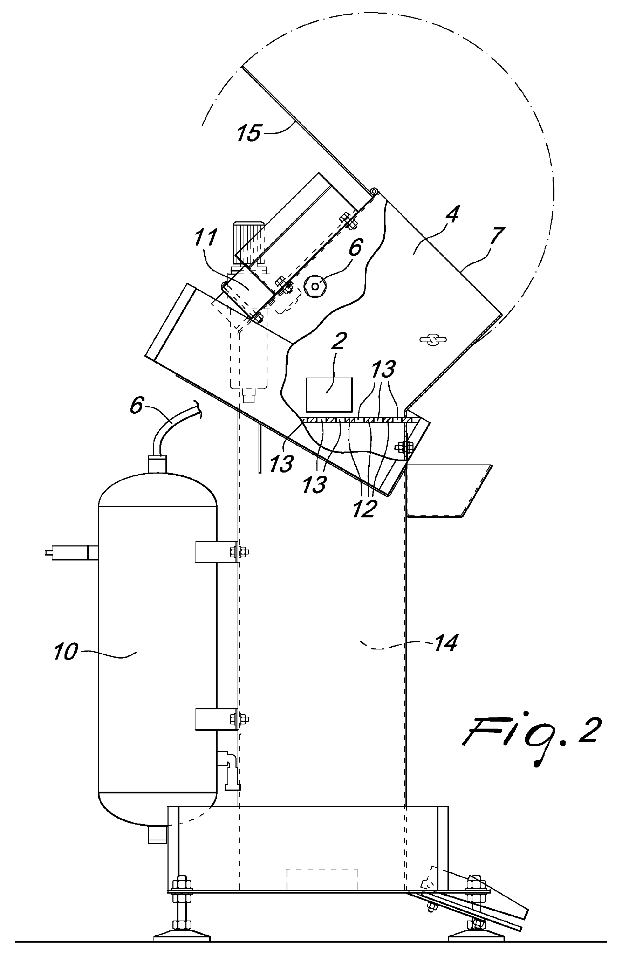

Figure 2 is a partially sectional side view of a unit for removing chips, slag and residues from elements being processed according to the invention;
Figure 3 is a top view of a unit for removing chips, slag and residues from elements being processed according to the invention;
Figure 4 is a sectional view, taken along a transverse plane, of a first embodiment of a dispenser of a unit for removing chips, slag and residues from elements being processed according to the invention;
Figure 5 is a sectional view, taken along a transverse plane, of a second embodiment of a dispenser of a unit for removing chips, slag and residues from elements being processed according to the invention.

With reference to the figures, the reference numeral 1 generally designates a unit for removing chips, slag and residues from elements 2 being processed.

The unit 1 for removing chips, slag and residues comprises a box-like body 3.

The box-like body 3 is provided with at least one internal cavity 4, on which at least one dispenser 5 is directed which is supplied by at least one respective circuit 6 for feeding cleaning fluid.

The box-like body 3 comprises at least one opening 7 for the insertion and removal of the element 2 to be cleaned.

It should be noted that, according to an embodiment of particular interest in practice and in application, the dispensers 5 may be a plurality, each shaped differently with respect to the other ones in order to fully perform the cleaning task related to the geometric configuration in which it is arranged (during use) with respect to the element 2.

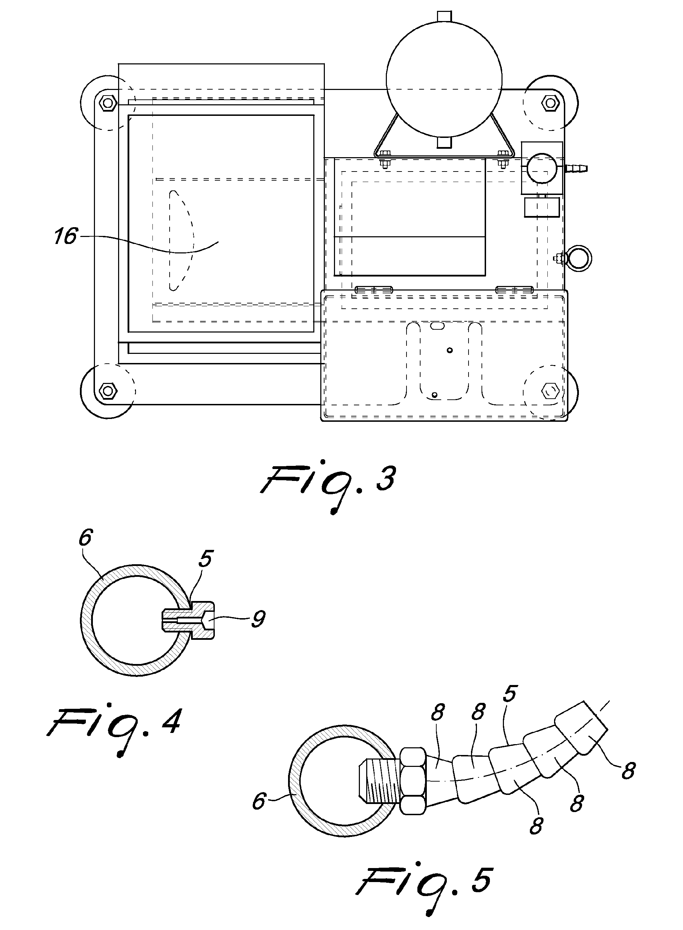

In particular, at least one dispenser 5 is of the type that can be oriented according to a plurality of geometric configurations, defining a plurality of possible directions for the dispensed fluid jet. The embodiment shown in Figure 5 refers to a dispenser 5 that is provided with a duct constituted by contiguous bodies 8 which are mutually associated in a configuration for mutual articulation. The body 8 arranged further upstream is coupled to the circuit 6 that will supply it.

In practice, the described embodiment can be replaced in any case with any embodiment that provides for the presence of an articulated tubular portion that is fixed at one of its ends, even indirectly, to one of the walls of the box-like body 3 and is provided, at the opposite end, with at least one respective dispensing nozzle. Of course, in this case the articulated tubular portion must comprise an internal duct which is connected upstream to the fluid supply circuit 6 and downstream to the at least one respective nozzle.

As an alternative, it is possible to resort to dispensers 5 of a substantially fixed type which are jointly connected to at least one component of the circuit 6 and in which a dispensing nozzle 9 sends the jet of fluid directly toward the element 2.

It should be noted that in order to maximize the versatility of the unit 1 according to the invention, the at least one nozzle 9, jointly connected to the downstream end of the at least one dispenser 5, is interchangeable depending on the type of jet of fluid that is required: in this manner, by combining different nozzles 9 mounted on respective dispensers, it is possible to combine the effects of various types of jet, ensuring optimum cleaning of the element 2.

According to a further embodiment, aimed at maximum customization of the operation of the unit 1, the at least one nozzle 9 is of the type in which the geometry of the outlet is adjustable, depending on the type of jet of fluid that is required. The adjustment of the outlet (which can be obtained for example by means of a screw adjustment arranged at the end of the nozzle 9) can allow to adapt the jet of each nozzle 9 to the specific case: it is in fact necessary to modify the type of jet as a function of the chemical and physical characteristics of the cleaning fluids and of the type of material that has to be removed.

According to an embodiment of undoubted interest in application, the cleaning fluid is compressed air: in this case, on the unit 1 there is a cylinder 10 for collecting the compressed air with which the circuit 6 is associated.

Positively, the circuit 6 comprises respective filters 11, designed to control the characteristics of the compressed air that is sent to the dispensers 5.

In any case, the unit 1 might comprise, jointly connected to its structure, a compressor (connected to a respective power supply mains) designed for the unlimited supply of compressed air; likewise, the circuit 6 might also be connected directly to a compressed air duct that is already present (to perform other tasks) in the environment where the unit 1 is used.

In a further possibility of application of the unit 1 according to the invention, the cleaning fluid is constituted by water: the solvent qualities of water in fact make it an excellent cleaning fluid.

The presence of water within a jet of compressed air (water atomized through the compressed air) finally ensures optimum removal of any type of residual material: it is thus presumable to adopt combined cycles of compressed air and water for some particular applications.

Again in the case of particular specific applications, it might be possible to adopt a cleaning fluid constituted by a mixture of air, water and optional additives, such as abrasion dusts, chemical-physical detergents and the like. Some types of residue in fact can be removed effectively only by way of mechanical actions (surface abrasion ensured by a jet containing dust) or chemical-physical actions (detergents, hot water, steam). Similar embodiments constitute a possible variation of the basic embodiment disclosed in the present invention.

The internal cavity 4 comprises a lower surface 12 (base) for accommodating the element 2 to be cleaned.

This surface 12 is provided with at least one opening 13 for draining the material removed by the fluid jets toward a lower collecting tank 14.

The tank 14 must be of a type suitable for the disposal of the collected slag: it is therefore easily removable for correct emptying thereof according to the criteria provided by applicable statutory provisions regarding the disposal of removed slag.

It should be noted that in order to facilitate the operations for use even by scarcely skilled personnel, an upper surface 15 of the box-like body 3 is at least partially transparent in order to monitor the cleaning of the element 2 to be cleaned.

At the same time, at least one of the surfaces of the box-like body 3 can be opened (particularly the surface 15) and comprises an opening, for example the opening 7 (arranged on the surface 15), for optional manual handling of the element 2 during its cleaning.

A significant characteristic of the box-like body 3 can be ascribed to the presence of suitable supporting elements of the rolling type (wheels, rollers or balls) for the easy movement of the entire unit 1 according to the requirements of use. In practice, the unit 1 according to the invention can be arranged to the side of the processing machine that is being used at that time and moved if necessary proximate to other machines, thus optimizing the respective processing cycles.

Again to make the unit 1 consistent with the machine to which it is laterally adjacent, there are telescopic arms (or in any case arms of variable length) in association with the supporting elements: this allows to vary the height of the unit 1 at will.

The unit 1, in a particularly complete and automated version thereof, comprises at least one control and management apparatus, which is designed for example to provide timing of the operation of the dispensers 5 and to supply power to respective lighting devices. This apparatus may further be interconnected to all the additional components associated with the unit 1, and by means of such apparatus it is possible to select the fluid to be used (if there are multiple supply circuits, each intended to convey a different type of fluid), the type of cleaning treatment and other operating parameters.

It should be noted that it is possible to interpose, between the lower surface 12 for accommodating the element 2 to be cleaned and the lower collecting tank 14, at least one aspirator to convey the material removed from the element 2 through the openings 13 in the tank 14.

Conveyance is ensured by the generation of a partial vacuum that is adapted to produce a movement of air in this direction.

Some operating programs are preset within the control and management apparatus and set the times and methods of the cleaning operations in order to ensure semiautomatic operation.

In any case, it is necessary to provide for the start of the selected program by means of a clearance button, which according to a preferred embodiment is of the pedal type.

The control panel (which comprises the electrical components and the pneumatic ones and optionally the hydraulic ones) is positively of the impact-resistant type and with a degree of protection against the entry of solids and/or liquids (IP protection degree) adapted to ensure maximum protection of its components.

To ensure comfortable use, there are shelves 16 on which the already-cleaned elements 2 are to be stacked.

The choice of the construction materials will be dictated by the specific embodiments, although a preferred embodiment adopts metal plate and material of the scratch-resistant type for the lower surface 12 (in order to avoid its rapid degradation due to frequent use).

It might also be possible to install guns for dispensing compressed air of a known type to perform any optional cleaning operations or for cleaning the unit 1.

Advantageously, the unit 1 according to the invention allows complete cleaning of the elements 2 that have undergone a mechanical processing with the minimal addition of labor and therefore with reduced costs and a simplified method.

Positively, the unit 1 according to the invention allows the collection and storage of chips, slag and residues removed from the elements 2 with the consequent possibility to dispose of such substances in full compliance with the applicable laws/statutory provisions.

Conveniently, the unit 1 according to the invention ensures the drastic reduction (even to complete elimination) of the material atomized into the environment during cleaning, with consequent improvement of the environmental conditions for personnel, which is not exposed to risks of unwanted contact with such chips, slag and residues.

In view of this characteristic of the unit 1, it is also noted that the lack of dispersion of material (chips, slag and residues) into the environment prevents the forming of slippery layers on the surfaces of the environment (floors, walls and machinery) or of layers that can at least weakly conduct electric current and constitute a possible source of risk of electrocution for personnel.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without abandoning the scope of the protection of the appended claims.

The disclosures in Italian Patent Application No. BO2007A000854 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A unit (1) for removing chips, slag and residues from elements (2) being processed, **characterized in that** it comprises a box-like body (3) provided with at least one internal cavity (4) onto which at least one dispenser (5) is directed which is supplied by at least one respective circuit (6) for feeding cleaning fluid, said box-like body (3) comprising at least one opening (7) for introducing and removing an element (2) to be cleaned.

2. The unit according to claim 1, **characterized in that** said at least one dispenser (5) can be oriented according to a plurality of geometric configurations, defining a plurality of possible directions for the dispensed jet of fluid.

3. The unit according to claim 2, **characterized in that** said at least one orientable dispenser (5) comprises an articulated tubular portion, which is fixed at one of its ends, even indirectly, to one of the walls of the box-like body (3) and is provided, at the opposite end, with at least one respective dispensing nozzle (9) and an internal duct which is connected upstream to the fluid supply circuit (6) and downstream to the at least one respective nozzle (9).

4. The unit according to claim 3, **characterized in that** said at least one nozzle (9) is interchangeable depending on the type of fluid jet that is required.

5. The unit according to claim 3, **characterized in that** said at least one nozzle (9) is of the type in which the geometry of the outlet is adjustable depending on the type of jet of fluid that is required.

6. The unit according to claim 1, **characterized in that** said cleaning fluid is compressed air.

7. The unit according to claim 1, **characterized in that** said cleaning fluid is water.

8. The unit according to claim 1, **characterized in that** said cleaning fluid is constituted by a mixture of air, water and optional additives, such as abrasion powders, chemical-physical detergents, and the like.

9. The unit according to claim 1, **characterized in that** said internal cavity (4) comprises a lower surface (12) for accommodating the element (2) to be cleaned, which is provided with at least one opening (13) for draining the material removed by the jets of fluid toward a lower collecting tank (14), said tank (14) being of a type suitable for the disposal of the collected slag.

10. The unit according to one or more of the preceding claims, **characterized in that** at least the upper surface (15) of said box-like body (3) is at least partially transparent in order to monitor the cleaning of the element to be cleaned (2).

11. The unit according to one or more of the preceding claims, **characterized in that** at least one of the surfaces of said box-like body (3) can be opened and comprises the at least one said opening (7) for optional manual movement of the element (2) during its cleaning.

12. The unit according to one or more of the preceding claims, **characterized in that** said box-like body (3) comprises suitable supporting elements of the rolling type, for easy movement of the entire unit (1) depending on the requirements of use.

13. The unit according to one or more of the preceding claims, **characterized in that** it comprises a respective cylinder (10), bottle, of compressed air for supplying said supply circuit (6) of the cleaning fluid.

14. The unit according to one or more of the preceding claims, **characterized in that** it comprises at least one control and management apparatus that is intended at least to provide timing of the operation of the dispensers (5) and the supply of respective lighting apparatuses.

15. The apparatus according to one or more of the preceding claims, **characterized in that** said dispensers (5) are a plurality, of which at least one can be oriented according to a plurality of geometric configurations.

16. The unit according to one or more of the preceding claims,
**characterized in that** between said lower surface (12) for accommodating the element (2) to be cleaned, provided with at least one opening (13) for draining the material removed by the jets of fluid, and said lower collecting tank (14) there is at least one interposed aspirator for conveying the material removed from the element (2) through said opening (13) into said tank (14), by generating a partial vacuum that is adapted to produce a movement of air **in that** direction.
